# EUROPÄISCHE PATENTANMELDUNG

(11) **EP 0 959 576 A2**
(43) Veröffentlichungstag der Anmeldung: **24.11.1999**
(21) Anmeldenummer: 99440103.2
(22) Anmeldetag: 11.05.1999
(51) Int. Cl.: H04J 13/00

(54) **Lichtquelle sowie Verfahren für die Übertragung von spektralkodierten Daten**

(30) Priorität: 20.05.1998 DE 19822616
(71) Anmelder: ALCATEL, 75008 Paris (FR); Alcatel SEL Aktiengesellschaft, D-70435 Stuttgart (DE)
(72) Erfinder: Pfeiffer, Thomas Dr., 70569 Stuttgart (DE)
(74) Vertreter: Rausch, Gabriele, Dr.

(57) **Zusammenfassung**

Es wird eine Lichtquelle mit einem breitbandigen frequenzperiodischen Ausgangsspektrum für digital spektralkodierte Daten vorgeschlagen, wobei die Lichtquelle aus einem Halbleiterlaser besteht, der innerhalb einer Bitperiode frequenz- oder phasenmoduliert wird.

## Beschreibung

Die Erfindung geht aus von einer Lichtquelle sowie einem Verfahren für die Übertragung von digitalen spektralkodierten Daten nach der Gattung des Hauptanspruches.

Aus dem Stand der Technik ,beispielsweise aus der Patentanmeldung 197 231 03.9, sind Übertragungsverfahren unter Verwendung der spektralen Kodierung bekannt. Ein solches optisches Übertragungsnetz besteht aus optischen Übertragungsleitungen und optischen Splittern sowie gegebenenfalls optischen Verstärkern und dient zur Übertragung kodierter, gemultiplexter optischer Signale. Jeder Sender enthält einen Kodierer, in dem die zu übertragenden Signale vor ihrer Aussendung ins optische Übertragungsnetz codiert werden. Die Kodierung erfolgt auf optischem Wege, z.B. durch Frequenzkodierung mit einem optischen Filter. Jeder Empfänger, der die Daten eines speziellen Senders empfangen will, muß einen Dekodierer enthalten, der auf den Kodierer dieses bestimmten Senders abgestimmt ist. Im einfachsten Fall sind die Frequenzbereiche, die für optische Signale durchlässig, und die Frequenzbereiche, die für optische Signale gesperrt sind, beim Kodierer und beim Dekodierer gleich. Dieses Kodierverfahren ist unter dem Begriff CDMA (Code Division Multiple Access) bekannt. Als Sender dienen in diesen Systemen Leuchtdioden, deren breitbandiges Emissionsspektrum ein optisches Filter durchlaufen. Das optische Filter ist beispielsweise ein Fabry-Perot-Filter, das das breitbandige Spektrum in einen Frequenzkamm umwandelt. Ein erheblicher Nachteil dieser bekannten Systeme ist die geringe optische Ausgangsleistung der zur Verfügung stehenden breitbandigen Lichtquellen. Die bisher verwendeten Leuchtdioden emittieren um 1.550 nm und das mit ohnehin sehr geringer Leistung (< 0,1 Milliwatt), was in Verbindung mit passiven optischen Filtern zu Sendeleistungen im Bereich von ca. 30 µW führt. Daher wird in solchen Übertragungssystemen immer ein optischer Verstärker benötigt.

Die erfindungsgemäße Lichtquelle mit den kennzeichnenden Merkmalen der unabhängigen Ansprüche hat dem gegenüber den Vorteil, daß wesentlich höhere Ausgangsleistungen erreicht werden können, und so auf einen Einsatz eines optischen Verstärkers verzichtet werden kann. Vorteilhafterweise wird der breitbandige Frequenzkamm, der für die Verwendung des CDMA-Verfahrens notwendig ist, aktiv hergestellt. Dabei wird der Injektionsstrom des Halbleiterlasers innerhalb einer Bitperiode beispielsweise sinusförmig frequenz- oder phasenmoduliert.

Durch die in den Unteransprüchen aufgeführten Maßnahmen ist eine vorteilhafte Weiterbildung und Verbesserung der in den unabhängigen Ansprüchen angegebenen Lichtquellen möglich. Besonders vorteilhaft ist es, daß die spektrale Breite der frequenzperiodischen Ausgangsleistung des Halbleiterlasers vom Verhältnis aus Frequenzhub und Modulationsfrequenz bestimmt wird und daher einstellbar ist.

Vorteilhafterweise wird ein DFB (Distributed Feedback Laser) verwendet. Auch der Einsatz eines Fabry-Perot Lasers ist als Lichtquelle für das CDMA-Verfahren möglich.

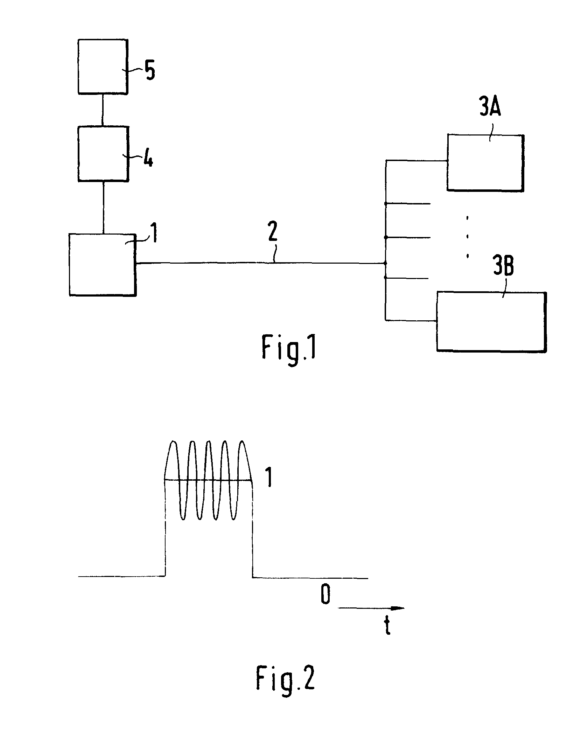

Ein Ausführungsbeispiel der Erfindung ist in der Zeichnung dargestellt und in der nachfolgenden Beschreibung näher erläutert. Es zeigt die Figur 1 ein erfindungsgemäßes Übertragungssystem, Fig 2 eine schematische Modulation des Signals,
Fig. 1 zeigt einen Sender 1 der über eine Übertragungsleitung 2 mit Empfängern 3A, 3B usw. in Verbindung steht. der Sender 1 steht mit einer Hochfrequenzquelle 4 in Verbindung. Die Hochfrequenzquelle steht in diesem Ausführungsbeispiel noch mit einem Rauschgenerator 5 in Verbindung.
Fig 2 zeigt schematisch ein Signal Bit 1 auf dem das Hochfrequenzsignal überlagert ist. Das modulierte Signal wird übertragen und auf der Empfangsseite nach Durchlaufen eines speziell abgestimmten Filters des Empfängers detektiert.

Die Ausbildung des spektralen Kammes kann jeweils in den unterschiedlichen Bitperioden unterschiedlich gewählt werden. Die spektrale Kodierung der Signale wird jeweils von einem Empfänger, der entsprechende Filtereinrichtungen besitzt, gelesen.

Der grundlegende Vorteil der vorliegenden Erfindung besteht darin, daß eine Lichtquelle zur Verfügung gestellt wird, die aktiv einen optischen Kamm mit frequenzperiodischen Spektrum erzeugt und möglichst viele äquidistante Linien bei großer integraler Laserleistung enthält. Die Laserleistung ist dabei integral über 1 mW. Die spektrale Kodierung über die Modulation des Injektionsstrom ist sehr flexible an die Übertragungsverhältnisse und an die Zahl und Performance der Empfangsseite anpaßbar. Dazu wird ein Halbleiterlaser während der Dauer einer Bitperiode moduliert. Eine Bitperiode bedeutet bei einer Bitrate von 10 Megabit pro Sekunde eine Zeitdauer von 100 ns. Innerhalb dieser Zeit muß der Halbleiterlaser frequenz- oder phasenmoduliert werden. Dazu wird dem Injektionsstrom des Halbleiterlasers ein zusätzlicher geringer, hochfrequenter Modulationstrom aufaddiert. Der Modulationstrom kann beispielsweise mit einer Frequenz von 100 MHz den Injektionsstrom modulieren. Durch die Modulation des Injektionsstroms des Halbleiterlasers entsteht im Ausgangsspektrum des Lasers ein frequenz- beziehungsweise phasenmoduliertes Ausgangsspektrum, dessen spektrale Breite durch einen Modulationsindex m gegeben ist. Dieser Modulationsindex m entspricht etwa der Anzahl der Linien. Er hängt vom Quotienten aus Frequenzhub oder Phasenhub und Modulationsfrequenz ab. Der Frequenzhub ist proportional zur Amplitude des hochfrequenten Modulationsstromes, der den Injektionsstrom mit der Modulationsfrequenz moduliert. Um bei 100 MHz Modulationsfrequenz 100 spektrale Linien zu erzeugen, muß der Frequenzhub 10 GHz betragen. Für einen solchen Modulationshub von 10 GHz ist ein zusätzlicher Modulationsstrom von wenigen mA erforderlich. Die zusätzliche Modulation des Injektionsstromes innerhalb einer Bitperiode ist für heute gebräuchliche DFB-Laser ohne weitere Probleme anwendbar. Verwendet man Fabry-Perot Laser müssen die Abstände zwischen den Longitudinal-Moden der Laseremission so eingestellt werden, daß sie dem ganzzahligen Vielfachen der Modulationsfrequenz entsprechen. Eine solche Einstellung erfolgt über Temperierung des Fabry-Perot Lasers.

Die spektrale Kodierung in einem Übertragungssystem unter Verwendung einer modulierten Laserlichtquelle erfolgt über die Zuweisung des Abstands der periodisch spektralen Komponenten. Damit steht für jeden Empfänger ein spezieller Frequenzkamm zur Verfügung, dessen Abstand spezifisch für den entsprechenden Empfänger ist. Die Codierung erfolgt damit über die Modulationsfrequenz, die entsprechend eingestellt wird. Die Modulationsfrequenz bestimmt den Abstand der Linien voneinander. Damit könne bei diesem Übertragungsverfahren bitweise unterschiedliche Frequenzkämme erzeugt werden, deren Linienabstand typisch ist. Das Übertragungsverfahren, das mit einem besonders einfachen und kostengünstigen Sender arbeiten kann, arbeitet bis zu Bitraten von ca 10 MHz.

Jeder Empfänger besitzt ein optisches Filter. Nur Signale mit dem für diesen Empfänger festgelegten Kode werden optisch durchgelassen und können detektiert werden. Dabei wird im allgemeinen bei einer Filterkurve mit sin² Verlauf auf das Maximum der zentralen Spektrallinie detektiert. Daher ist es auf einfache Art möglich einen "1" oder einen "0" zu übertragen: Bei einer 1 emittiert der Sender einen spektralen Kamm der Empfänger detektiert die zentrale Linie. Bei einer Null veschiebt man den Arbeitspunkt so, daß die Emission des spektralen Kamms um einen halben Linienabstand verschoben wird. Der Empfänger detektiert jetzt in der zentralen Position eine "0".

Die Verwendung einer aktiven Laserlichtquelle als Lichtquelle für ein CDMA Übertragungsverfahren kann noch optimiert werden. Ohne Störung liefert die erfindungsgemäße Laserlichtquelle sehr schmale Linien. Die Verwendung von sehr schmalen Linien kann bei der Übertragung in speziellen Überlagerungsfällen zu einem kompletten Auslöschen der Information führen. Die Bitfehlerrate wird geringer, wenn die spektralen Linien etwas verbreitert werden. Für diesen Zweck wird dem Hochfrequenzsignal ein Phasenrauschen überlagert. Als einfachste Fall dient dazu ein Rauschoszillator 5, der mit der Hochfequenzerzeugung in Verbindung steht.

Das Übertragungsverfahren funktioniert ebenfalls unter Verwendung konventioneller Lichtquellen mit externen Modulatoren. Die Lichtleitung ist in diesem Fall nicht so groß, aber die Übertragungsmöglichkeiten entsprechen der oben ausgeführten Form.

## Patentansprüche

1. Lichtquelle, die eine breitbandigen frequenzperiodische Ausgangsleistung für die Übertragung von digitalen, spektral kodierten Daten (CDMA-Verfahren) bereitstellt, dadurch gekennzeichnet, daß die Lichtquelle aus einem Halbleiterlaser besteht, der innerhalb einer Bitperiode frequenzmoduliert wird.

2. Lichtquelle, die einen breitbandigen frequenzperiodische Ausgangsleistung für die Übertragung von digitalen, spektral kodierten Daten (CDMA-Verfahren) bereitstellt, dadurch gekennzeichnet, daß die Lichtquelle aus einem Halbleiterlaser besteht, der innerhalb einer Bitperiode phasenmoduliert wird.

3. Lichtquelle nach einem der vorhergehenden Ansprüche, dadurch gekennzeichnet, daß eine hochfrequente Modulation über den Injektionsstrom des Lasers erfolgt.

4. Lichtquelle nach einem der vorhergehenden Ansprüche, dadurch gekennzeichnet, daß die spektrale Breite der frequenzperiodischen Ausgangsleitung von dem Verhältnis aus Frequenzhub Δf oder Phasenhub und Modulationsfrequenz fₘ bestimmt ist.

5. Lichtquelle nach einem der vorhergehenden Ansprüche, dadurch gekennzeichnet, daß der Halbleiterlaser ein DFB- (Distributed Feedback) Laser ist.

6. Lichtquelle nach einem der vorhergehenden Ansprüche, dadurch gekennzeichnet, daß der Laser ein Fabry-Perot Laser ist und der Modenabstand ein ganzzahliges Vielfaches des Modulationsfrequenz beträgt.

7. Lichtquelle nach einem der vorhergehenden Ansprüche, dadurch gekennzeichnet, daß die Linienform der Lichtquelle durch zusätzliche Ansteuerung mit einem Rauschsignal beeinflußt wird.

8. Lichtquelle nach einem der vorhergehenden Ansprüche, dadurch gekennzeichnet, daß das Verhältnis der spektralen Linenbreiten zum Linienabstand etwa 1:30 beträgt.

9. Lichtquelle nach einem der vorhergehenden Ansprüche, dadurch gekennzeichnet, daß eine Umschaltung von Bit "1" auf Bit "0 "für einen spektral kodierten Kanal durch Verschiebung des Arbeitspunktes des Lasers erfolgt.

10. Verfahren zur spektralen Kodierung von Daten unter Verwendung einer Laserlichtquelle nach einem der vorhergehenden Ansprüche, dadurch gekennzeichnet, daß die Kodierung bitweise durch Veränderung des Modulationsindexes erfolgt.

11. Verfahren zur spektralen Kodierung von Daten unter Verwendung einer breitbandigen Lichtquelle mit nachgeschaltetem Filter, dadurch gekennzeichnet, daß die Kodierung über bitweise Änderung des Modulationsindex über einen externen Modulator erfolgt.
